# EUROPÄISCHE PATENTSCHRIFT

(11) **EP 0 866 971 B1**
(45) Veröffentlichungstag und Bekanntmachung des Hinweises auf die Patenterteilung: **03.04.2002**
(21) Anmeldenummer: 96945763.9
(22) Anmeldetag: 09.12.1996
(51) Int. Cl.: G01P 15/00

(54) **SENSORANORDNUNG FÜR EIN KRAFTFAHRZEUG ZUM ERKENNEN EINES AUFPRALLS**
MOTOR VEHICLE SENSOR ARRANGEMENT FOR DETECTING AN IMPACT
SYSTEME DE DETECTION POUR AUTOMOBILE PERMETTANT D'IDENTIFIER UNE COLLISION

(30) Priorität: 12.12.1995 DE 19546358
(43) Veröffentlichungstag der Anmeldung: 30.09.1998
(73) Patentinhaber: SIEMENS AKTIENGESELLSCHAFT, 80333 München (DE)
(72) Erfinder: WÄCHTER, Michael, D-93047 Regensburg (DE); SWART, Marten, D-93083 Obertraubling (DE); PAUL, Klemens, D-93083 Obertraubling (DE); ANTHOFER, Anton, D-92271 Freihung (DE); MADER, Gerhard, D-93107 Thalmassing (DE); VOGT, Richard, D-93161 Sinzing (DE)
(86) Internationale Anmeldenummer: DE9602354
(87) Internationale Veröffentlichungsnummer: WO9722009

(56) Entgegenhaltungen:
- DE-A- 4 016 644
- DE-A- 4 220 270
- ATZ AUTOMOBILTECHNISCHE ZEITSCHRIFT, Bd. 96, Nr. 10, Oktober 1994, Seite 618/619 XP000469483 WETZEL G: "STEUERUNG EINES MEHRFACH-RUECKHALTESYSTEMS CONTROLS FOR A MULTIPLE PASSENGER RESTRAINT SYSTEM"

## Beschreibung

Die Erfindung betrifft eine Sensoranordnung für ein Kraftfahrzeug zum Erkennen eines Aufpralls.

Eine Sensoranordnung für ein Kraftfahrzeug zum Erkennen eines Aufpralls bzw einer Verzögerung wird vorzugsweise in einer Steueranordnung für mindestens ein Rückhaltemittel des Kraftfahrzeugs verwendet. Zeitgemäße Sensoranordnungen erkennen Verzögerungen parallel und quer zur Fahrzeuglängsachse. Zeitgemäße Insassensschutzsysteme für Kraftfahrzeuge weisen dementsprechend eine Steueranordnung mit einer solchen Sensoranordnung auf, sowie mindestens ein Rückhaltemittel zum Seitenaufprallschutz in jeder Fahrzeughälfte und mindestens ein Rückhaltemittel zum Frontaufprallschutz. Bei ersteren Rückhaltemitteln handelt es sich vorzugsweise um Seitenairbags und/oder Kopfairbags, bei letzeren vorzugsweise um Fahrer- und/oder Beifahrerairbag und/oder Gurtstraffer.

Ein in ATZ Automobiltechnische Zeitschrift 96, Nr. 10, Oktober 1994, Seiten 618, 619 und in der nachveröffentlichten DE 44 25 846 A1 vorgeschlagenes Insassenschutzsystem zum Erkennen eines Seitenaufpralls weist eine Sensoranordnung auf, die je einen in den Seitentüren angeordneten Querbeschleunigungssensor enthält, welcher Fahrzeugbeschleunigungen quer zur Fahrzeuglängsachse aufnimmt. Zum Erkennen eines Frontaufpralls enthält die vorgeschlagene Sensoranordnung zwei in einem zentralen Steuergerät um 45 Grad zur Fahrzeuglängsachse versetzt angeordnete Beschleunigungssensoren. Das zentrale Steuergerät weist ferner eine Auswerteschaltung auf, die zum einen in Abhängigkeit von den Signalen der zentral angeordneten Beschleunigungssensoren das Rückhaltemittel zum Frontaufprallschutz und in Abhängigkeit von den Signalen der Querbeschleunigungssensoren die Rückhaltemittel zum Seitenaufprallschutz auslöst. Eine vergleichbare Anordnung ist zudem aus der DE-A-4 220 270 bekannt.

Der Erfindung liegt die Aufgabe zugrunde, eine Sensoranordnung zu schaffen, die eine zuverlässige Auslösung gewährleistet wie auch eine Fehlauslösung verhindert, bei geringem Aufwand an Beschleunigungsaufnehmern.

Die Aufgabe wird durch die Merkmale des Patentanspruchs 1 gelöst.

Die erfindungsgemäße Sensoranordnung weist eine Vorrichtung zum Aufnehmen einer Beschleunigung in jeder Fahrzeughälftebezogen auf die Fahrzeuglängsachse - auf, wobei jede Vorrichtung zwei Beschleunigungungssensoren mit unterschiedlich gerichteten Empfindlichkeitsachsen aufweist.

Die Empfindlichkeitsachsen der Beschleunigungssensoren sind vorzugsweise in einer durch die Fahrzeuglängsachse und die Fahrzeugquerachse festgelegten Ebene ausgerichtet, so daß jede Vorrichtung empfindlich ist für auf das Fahrzeug einwirkende Stöße mit Verzögerungen in einem beliebigen Winkel zur Fahrzeuglängsachse in dieser Ebene, insbesondere auch für Stöße von vorne (0 Grad zur Fahrzeuglängsachse) und von der Seite (90 Grad zur Fahrzeuglängsachse).

Vorzugsweise ist jede Vorrichtung als kompaktes Bauteil ausgebildet. Dabei können die Beschleunigungssensoren auf einem gemeinsamen Träger anmgeordnet sein. Vorzugsweise enthält jede Vorrichtung eine dichte, die beiden Beschleunigungssensoren umschließende Umhüllung, z.B. ein dichtes Gehäuse oder einen Vergußmantel, durch die die Beschleunigungssensoren vor Umwelteinflüssen wie Feuchtigkeit oder Korrosion geschützt werden. Damit sind die Vorrichtungen unter geringem Materialeinsatz in wenigen fertigungstechnischen Schritten herstellbar.

Jede Vorrichtung ist dezentral im Fahrzeug angeordnet, d.h. deutlich von dem mittleren Bereich des Fahrzeugs abgewandt, also insbesondere nicht mittig im Fahrzeug etwa am Fahrzeugtunnel. Damit liefert beispielsweise ein Querbeschleunigungssensor der ersten Vorrichtung in der linken Fahrzeughälfte bei einem Seitenaufprall von rechts ein gegenüber einem in der anderen Vorrichtung angeordneten Querbeschleunigungssensor verzögertes Signal.

Die Vorrichtungen sind vorzugsweise an einem Fahrzeugsitz angeordnet; die eine Vorrichtung beispielsweise am Fahrersitz, die andere Vorrichtung am Befahrersitz. Alternativ sind die Vorrichtungen an Seitenteilen des Fahrzeugs angeordnet; die eine Vorrichtung beispeilsweise an der Fahrertür, die andere Vorrichtung an der Beifahrertür.

Mit der erfindungsgemäßen Sensoranordnung wird insbesondere ein Schrägaufprall dezentral, d.h. nahe am Aufprallort, von der jeweiligen Vorrichtung und dort insbesondere von einem Längsbeschleunigungssensor der Vorrichtung aufgenommen. Dämpfung und Ansprechzeit des dezentral angeordneten Beschleunigungssensors sind gegenüber einem zentral angeordneten Längsbeschleunigungssensor für den Schrägaufprall deutlich verringert, die Sensorempfindlichkeit ist erhöht.

Ein wesentlicher Vorteil der erfindungsgemäßen Sensoranordnung liegt darin, daß sie Stöße aus einer beliebigen Richtung erkennen kann, daß also Stöße auf das Kraftfahrzeug von vorne von der Seite und von hinten sowie schräge Stöße unter einem beliebigen Winkel erkannt werden, wobei ein Stoß unabhängig von seiner Stoßrichtung von beiden Vorrichtungen erkannt wird. Die Sensoranordnung ermöglicht also, daß die Signale der einen Vorrichtung zur Überprüfung der Signale der anderen Vorrichtung verwendet werden können. Dabei sind die Beschleunigungssensoren nicht bloß redundant ausgeführt sondern hinsichtlich einer optimierten Signalaufnahme im Fahrzeug dezentral verteilt.

Durch die erfindungsgemäße Sensoreinrichtung stehen an zwei verschiedenen Stellen im Fahrzeug gemessene Signale sowohl für Front-, Seiten- und Schrägaufprall zur Verfügung, sodaß zusätzliche Information über den Verlauf eines Stoßes durch zeitliche Auswertung der Signale der an unterschiedlichen Stellen angeordneten Sensoren gewonnen werden kann. Beispielsweise kann durch eine solche Auswertung ermittelt werden, wie die durch einen Aufprall auf das Fahrzeug übertragene Energie über die Zeit durch die Fahrzeugkarosserie abgebaut wird.

Vorzugsweise weist jede Vorrichtung einen Längsbeschleunigungssensor zum Erfassen einer Fahrzeugbeschleunigung in Richtung der Fahrzeuglängsachse und einen Querbeschleunigungssensor zum Erfassen einer Fahrzeugbeschleunigung quer zur Fahrzeuglängsachse auf. Es können alternativ auch Beschleunigungssensoren eingesetzt werden, die andere Winkel zwischen ihren Empfindlichkeitsachsen aufweisen. Die Erfindung wird im folgenden jedoch unter Verwendung von Längs- und Querbeschleunigungssensoren erläutert.

Eine Steueranordnung für ein Rückhaltemittel im Kraftfahrzeug mit der erfindungsgemäßen Sensoranordnung kann insbesondere zwei vorteilhafte Weiterbildungen aufweisen:

Zum einem weist die Steueranordnung eine gemeinsame Auswerteeinrichtung für alle von den Vorrichtungen geliefereten Beschleunigungssignale auf. Dabei kann jeder Beschleunigungssensor über eine eigene elektrische Leitung mit der Auswerteeinrichtung verbunden sein. Vorzugsweise ist jede Vorrichtung nur über eine einzige, von beiden Beschleunigungssensoren einer Vorrichtung gemeinsam genutze Leitung zur seriellen Datenübertragung, etwa im Multiplexverfahren, mit der Auswerteeinrichtung verbunden. Vorzugsweise sind die beiden Vorrichtungen und die Auswerteeinrichtung über einen gemeinsamen Datenbus zur Datenübertragung von den Vorrichtungen zur Auswerteeinrichtung verbunden, aber auch zur Datenüberübertragung von der Auswerteeinrichtung zu den Vorrichtungen, beispielsweise zu Diagnosezwecken.

Die für beide Vorrichtungen gemeinsam vorgesehene Auswerteeinrichtung ist vorzugsweise als Mikrorechner ausgebildet und vorzugsweise in einem zentralen Bereich des Fahrzeugs angeordnet. Abhängig vom Einbauort von weiteren mit der Auswerteeinrichtung verbundenen Sensoren bzw dem Einbauort der mit der Auswerteeinrichtung verbundenen Rückhaltemittel ist eine zentrale Anordnung der Auswerteeinrichtung im Fahrzeug von Vorteil.

Vorteil dieser Steueranordnung ist ferner, daß bei Ausfall eines Beschleunigungssensors oder einer gesamten Vorrichtung die ausgefallene Funktion durch die entsprechenden Bauteile der anderen Vorrichtung übernommen werden kann.

Alternativ weist eine Auswerteeinrichtung der Steueranordnung zwei Auswerteeinheiten auf, wobei jeder Vorrichtung eine Auswerteeinheit zugeordnet ist. Die Auswerteeinheiten sind über eine Leitung zur Codesignalübertragung miteinander verbunden.

Bei einer solchen erfindungsgemäßen Steueranordnung ist vorzugsweise in jeder Fahrzeughälfte ein Steuergerät als kompaktes Bauteil angeordnet, das die jeweilige Vorrichtung und die jeweilige Auswerteeinheit enthält. Die Steuergeräte sind vorzugsweise an den zuvor für die Vorrichtungen vorgeschlagenen Stellen im Fahrzeug angeordnet.

Vorteil dieser Steueranordnung ist, daß bei Ausfall eines Beschleunigungssensors, einer gesamten Vorrichtung oder auch Bestandteilen einer Auswerteeinheit die ausgefallenen Funktionen durch die entsprechenden Bauteile des anderen Steuergeräts übernommen werden können, wobei der Datenaustausch über die Leitung zwischen den Steuergeräten durchgeführt wird.

Abgesehen von der Datenleitung zwischen den Auswerteeinheiten sind bei dieser Steueranordnung keine insbesondere langen Leitungen erforderlich: Leitungen von den Querbeschleunigungssensoren zum zentralen Steuergerät oder auch Leitungen von weiteren Sensoreinrichtungen z.B. zur Sitzbelegungserkennung oder zur Kindersitzerkennung zu einem zentralen Steuergerät entfallen, da bei der erfinungsgemäßen Steueranordnung die Steuergeräte nahe bei diesen Sensoreinrichtungen - etwa am Fahrzeugsitz - angeordnet sind. Da insbesondere lange Leitungen anfällig für Störungen sind, wird die die Zuverlässigkeit für das erfindungsgemäße Insassenschutzsystem erhöht. Für den Insassen schwerwiegende Folgen durch fehlerhafte Ausbzw Nichtauslösung können vermieden werden.

Bei allen erfindungsgemäßen Steueranordnungen werden ausgewählte oder ggf alle Beschleunigungssignale bzw von ihnen abgeleitete Signale in der zugehörigen Auswerteeinrichtung/Auswerteeinheit ausgewertet, z.B. mit einem Schwellwert verglichen oder algorithmisch verarbeitet. Bei Überschreiten des Schwellwerts oder Erfüllen eines Auslösekriteriums bei der algorithmischen Verarbeitung wird das betreffende Rückhaltemittel, wie beispielsweise ein Seitenairbag oder ein Gurtstraffer, ausgelöst. Mehrere Rückhaltemittel können insbesondere ausgewählt und zeitlich versetzt ausgelöst werden.

Gemäß der Weiterbildungen der erfindungsgemäßen Steueranordnungen werden zwei vorteilhafte Insassenschutzsysteme vorgeschlagen, die jeweils die Steueranordnung und zugehörige Rückhaltemittel aufweisen.

In jedem Fall weist das erfindungsgemäße Insassenschutzsystem mindestens ein Rückhaltemittel zum Seitenaufprallschutz in jeder Fahrzeughälfte - vorzugsweise einen Seitenairbag - und mindestens ein Rückhaltemittel zum Frontaufprallschutz, beispeilsweise den Fahrerairbag, gewöhnlich aber ein Rückhaltemittel zum Frontaufprallschutz je Fahrzeughälfte - vorzugsweise Fahrer- und Beifahrerairbag - auf, sodaß ein bestmöglicher Rundumschutz für die Insassen gewährleistet ist, unabhängig, von welcher Seite ein Aufprall erfolgt. Die Rückhaltemittel sind elektrisch mit der Auswerteeinrichtung verbunden.

Das Insassenschutzsystem mit einer gemeinsamen Auswerteeinrichtung für beide Vorrichtungen weist elektrisch leitende Verbindungen zwischen der Auswerteeinrichtung und den Rückhaltemitteln auf.

Bei dem Insassenschutzsystem mit zwei Auswerteeinheiten in unterschiedlichen Fahrzeughälften sind zumindest die Rückhaltemittel einer Fahrzeughälfte mit der Auswerteeinheit derselben Fahzeughälfte elektrisch verbunden. Lange Leitungen zwischen Steuergeräten und Aktoreinrichtungen wie insbesondere den Seitenairbags oder Gurtstraffern entfallen, da die Steuergeräte räumlich nahe bei den Aktoreinrichtungen angeordnet sind. Da insbesondere lange Leitungen anfällig für Störungen sind, wird die die Zuverlässigkeit für das erfindungsgemäße Insassenschutzsystems erhöht und für den Insassen schwerwiegende Folgen durch fehlerhafte Aus- bzw Nichtauslösung können vermieden werden. Durch das erfindungsgemäße Insassenschutzsystems wird bei voller Funktionsfähigkeit des Systems, also der zuverlässigen Auslösung von Rückhaltemitteln zum Frontund Schräg- und Seitenaufprallschutz zum einen Anzahl und Länge der Leitungen gegenüber bekannten Insassenschutzsystemen verringert, was die Störsicherheit des Systems erhöht und Leitungskosten einspart.

Folgende Steuerverfahren für die Rückhaltemittel des Insassenschutzsystems sind vorteilhaft:
Das Rückhaltemittel zum Frontaufprallschutz in der linken Fahrzeughälfte wird zumindest abhängig vom Längsbeschleunigungssignal des Längsbeschleunigungssensors in der linken Fahrzeughälfte ausgelöst. Zusätzlich ist in vorteilhafter Weise das Steuer- bzw Auslösesignal abhängig vom Längsbeschleunigungssignal des in der rechten Fahrzeughälfte angeordneten Beschleunigungssensors, der somit eine Schutzfunktion ähnlich einem Safing-Sensor übernimmt. Das Steuerverfahren gilt für das Rückhaltemittel zum Frontaufprallschutz in der rechten Fahrzeughälfte in entsprechender Weise.

Das Rückhaltemittel zum Seitenaufprallschutz in der linken Fahrzeughälfte wird zumindest abhängig vom Querbeschleunigungssignal des Querbeschleunigungssensors in der linken Fahrzeughälfte ausgelöst. Zusätzlich kann das Steuer- bzw Auslösesignal abhängig vom Querbeschleunigungssignal des in der rechten Fahrzeughälfte angeordneten Beschleunigungssensors, der die Schutzfunktion eines Safing-Sensors übernimmt. Das Steuerverfahren gilt für das Rückhaltemittel zum Seitenaufprallschutz in der rechten Fahrzeughälfte in entsprechender Weise.

Jeder als Safing-Sensor verwendete und vorzugsweise testbare Beschleunigungssensor zusammen mit einer zugehörigen Auswerteroutine übernimmt die Funktion einer herkömmlichen Schutzeinrichtung wie eines gewöhnlich nicht testbaren mechanischen Beschleunigungsschalters mit einer relativ niedrigen Ansprechschwelle, die in jedem Fall niedriger ist als eine dem maßgeblichen Sensor zugeordnete Schwelle, sodaß durch die Schutzeinrichtung ein Zeitfenster vorgegeben wird, innerhalb dessen der maßgebende Beschleunigungssensor eine Auslöseentscheidung herbeiführen muß. Der sog. Safing-Sensor verhindert bei fehlerhaftem maßgeblichen Sensor ein Auslösen des zugeordneten Rückhaltemittels.

Zum anderen kann einer der Längsbeschleunigungssensoren als maßgebender Sensor für das Auslösen aller Rückhaltemittel zum Frontaufprallschutz bestimmt sein. Abhängig vom Längsbeschleunigungssignal dieses Längsbeschleunigungssensors wird das/werden die Rückhaltemittel zum Frontaufprallschutz ausgelöst, egal auf welcher Fahrzeugseite sie angeordnet sind.
Der andere Längsbeschleunigungssensor übernimmt die Funktion eines Safing-Sensors.

In einer weiteren Weiterbildung der Erfindung werden die Rückhaltemittel einer Fahrzeughälfte abhängig von Winkel und Stärke eines Aufprallvektors gesteuert, welcher aus dem Längsbeschleunigungssignal und Querbeschleunigungssignal der entsprechenden Sensoren in derselben Fahrzeughälfte gebildet wird. Vorzugsweise wird die Vektorberechnung auch für die Sensorsignale der Sensoren in der anderen Fahrzeughälfte durchgeführt und damit das Ergebnis der Sensoren in der ersten Fahrzeughälfte überprüft. Im Sinne einer Schutzfunktion wird ein Auslösen verhindert, wenn die Verktorergebnisse der beiden Fahrzeughälften nicht in etwa übereinstimmen.

Bei Miteinbeziehen der aufprallortfernen Sensorsignale in die Auslöseentscheidnung für aufprallnahe Rückhaltemittel im Sinne einer Schutzfunktion gegen Fehlauslösungen muß berücksichtigt werden, daß die aufprallfernen Sensoren karosserieabhängig zeitverzögerte und gedämpfte Signale liefern.

Bei einem Insassenschutzsystem mit einer gemeinsamen Auswerteeinrichtung für beide Vorrichtungen werden vorbeschriebene Steuerverfahren von der Auswerteeinrichtung durchgeführt.

Bei einem Insassenschutzsystem mit einer Auswerteeinheit je Vorrichtung werden die einzelnen Berechnungen auf die Auswerteeinheiten verteilt: Vorzugsweise übernimmt jede Auswerteeinheit die Auswertung der Sensorsignale der ihr zugeordneten Sensoren. Die Auswerteergebnisse werden über die Datenleitung zur anderen Auswerteeinheit übermittelt und dort entsprechend der Steuerverfahren weiterverarbeitet. Alternativ können auch zumindest ausgewählte Sensorsignale von der einen zur anderen Auswerteeinheit übertragen werden.

Weitere zweckmäßige Ausgestaltungen der Erfindung sind in den Unteransprüchen gekennzeichnet.

Ein Ausführungsbeispiel der Erfindung wird im folgenden anhand der Zeichnung näher erläutert. Es zeigen:
- Figur 1:: Eine Draufsicht auf ein symbolisches Fahrzeug mit einem erfindungsgemäßen Insassenschutzsystem, und
- Figur 2:: Eine Draufsicht auf ein symbolisches Fahrzeug mit einem weiteren erfindungsgemäßen Insassenschutzsystem.

Gleiche Elemente sind figurenübergreifend durch die gleichen Bezugszeichen gekennzeichnet.

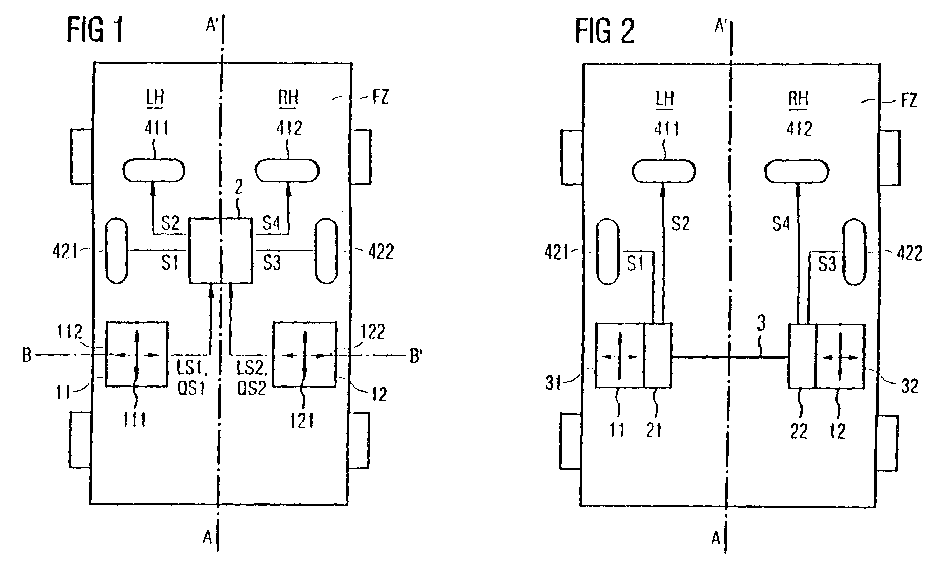

Figur 1 zeigt ein Fahrzeug FZ mit einem erfindungsgemäßen Insassensschutzsystem. Die Fahrzeuglängsachse A-A' und die Fahrzegquerachse B-B' sind angedeutet. In der linken und rechten Fahrzeughälfte LH und RH ist jeweils eine Vorrichtung 11 bzw 12 zum Erkennen einer Beschleunigung angeordnet. Jede Vorrichtung 11 enthält einen Längsbeschleunigungssensor 111 bzw 121 und einen Querbeschleunigungssensor 112 bzw 122. Die Empfindlichkeitsachsen der Beschleunigungssensoren 111,112,121,122 sind durch Pfeile angedeutet.

An eine zentral im Fahrzeug FZ angeordnete Auswerteeinrichtung 2 werden folgende Signale von den Vorrichtungen 11 und 12 geliefert, wobei jede Vorrichtung 11 und 12 über nur eine Leitung mit der Auswerteeinrichtung 2 verbunden ist: Ein erstes Längsbeschleunigungssignal LS1 des ersten Längsbeschleunigungssensors 111, ein erstes Querbeschleunigungssignal QS1 des ersten Querbeschleunigungssensors 112, ein zweites Längsbeschleunigungssignal LS2 des zweiten Längsbeschleunigungssensors 121 und ein zweites Querbeschleunigungssignal QS2 des zweiten Querbeschleunigungssensors 122.

Von der Auswerteeinrichtung 2 werden Steuersignale S1, S2, S3 und S4 gemäß vorbeschriebenen Steuerverfahren an einen Fahrerairbag 411, einen linken Seitenairbag 421, einen Beifahrerairbag 412 und einen rechten Seitenairbag 422 geliefert.

Figur 2 zeigt ebenfalls ein Fahrzeug FZ mit einem erfindungsgemäßen Insassenschutzsystem. Die Vorrichtungen 11 und 12 zum Erkennen einer Beschleunigung entsprechen denen aus Figur 1. Jede Vorrichtung 11 bzw 12 ist elektrisch mit einer zugeordneten und räumlich bei ihr angeordneten Auswerteeinheit 21 bzw 22 verbunden. Je eine Vorrichtung 11 bzw 12 und eine Auswerteeinheit 21 bzw 22 bilden zusammen ein Steuergerät 31 bzw 32. Die Auswerteeinheit 21 in der linken Fahrzeughälfte LH ist elektrisch mit dem Fahrerairbag 411 und dem linken Seitenairbag 421 verbunden, die Auswerteeinheit 22 in der rechten Fahrzeughälfte mit dem Beifahrerairbag 422 und dem rechten Seitenairbag 422. Die Auswerteeinheiten 21 und 22 sind über eine Leitung 3, z.B. einem CAN-Bus, elektrisch miteinander verbunden. Über die Leitung 3 können weitere Steuergeräte miteinander verbunden sein und Daten austauschen.

## Patentansprüche

1. Sensoranordnung für ein Kraftfahrzeug zum Erkennen eines Aufpralls, mit einer Vorrichtung (11,12) zum Aufnehmen einer Beschleunigung (LS1,LS2,QS1,Q52) in jeder Fahrzeughälfte (LH,RH), bezogen auf die Fahrzeuglängsachse (A-A'), **dadurch gekennzeichnet, dass** jede Vorrichtung (11,12) zwei Beschleunigungungssensoren (111,112,121,122) mit unterschiedlich gerichteten Empfindlichkeitsachsen aufweist.

2. Sensoranordnung nach Anspruch 1, bei der jede Vorrichtung (11,12) einen Längsbeschleunigungssensor (111,121) zum Erfassen einer Fahrzeugbeschleunigung in Richtung der Fahrzeuglängsachse (A-A') und einen Querbeschleunigungssensor (112,122) zum Erfassen einer Fahrzeugbeschleunigung quer zur Fahrzeuglängsachse (A-A') aufweist.

3. Steueranordnung für ein Rückhaltemittel in einem Kraftfahrzeug mit einer Sensoranordnung nach einem der vorhergehenden Ansprüche, mit einer Auswerteeinrichtung (2) zum Auswerten der von den Vorrichtungen (11,12) gelieferten Signale (LS1,LS2,QS1,QS2) und zum Erzeugen eines Steuersignals (S) für das Rückhaltemittel (4) abhängig davon.

4. Steueranordnung nach Anspruch 3, bei der die Auswerteeinrichtung (2) in einem mittleren Bereich des Fahrzeugs (FZ) angeordnet ist.

5. Steueranordnung nach Anspruch 3, bei der die Auswerteeinrichtung (2) zwei Auswerteeinheiten (21,22) aufweist und je eine Auswerteeinheit (21,22) einer Vorrichtung (11,12) zugeordnet ist, und bei der beide Auswerteeinheiten (21,22) über eine Leitung (3) zur Codesignalübertragung miteinander verbunden sind.

6. Steueranordnung nach Anspruch 5,
- mit zwei Steuergeräten (31,32), wobei jedes Steuergerät (31,32) eine Vorrichtung (11,12) und eine Auswerteeinheit (21,22) aufweist, und
- bei der das eine Steuergerät (31) in der linken Fahrzeughälfte (LH) und das andere Steuergerät (32) in der rechten Fahrzeughälfte (RH) angeordnet ist.

7. Insassenschutzsystem mit einer Steueranordnung nach einem der Ansprüche 3 bis 6,
- mit mindestens einem Rückhaltemittel (42) zum Seitenaufprallschutz in jeder Fahrzeughälfte (LH,RH) und mit mindestens einem Rückhaltemittel (41) zum Frontaufprallschutz,
- bei dem die Rückhaltemittel (41,42) elektrisch mit der Auswerteeinrichtung (2) verbunden sind.

8. Insassenschutzsystem nach den Ansprüchen 5 und 7, bei dem die in der linken Fahrzeughälfte (LH) angeordneten Rückhaltemittel zum Seitenaufprallschutz (421) und zum Frontaufprallschutz (411) elektrisch mit der in der linken Fahrzeughälfte (LH) angeordneten Auswerteeinheit (21) verbunden sind, und bei dem die in der rechten Fahrzeughälfte (RH) angeordneten Rückhaltemittel zum Seitenaufprallschutz (422) und zum Frontaufprallschutz (412) elektrisch mit der in der rechten Fahrzeughälfte (RH) angeordneten Auswerteeinheit (32) verbunden sind.

## Claims

1. Sensor arrangement for a vehicle for detecting an impact, with a device (11, 12) for sensing an acceleration (LS1, LS2, QS1, QS2) in each half of the vehicle (LH, RH), relative to the vehicle longitudinal axis (A-A'), **characterised in that** each device (11, 12) has two acceleration sensors (111, 112, 121, 122) with sensing axes with different alignment.

2. Sensor arrangement in accordance with Claim 1, whereby each device (11, 12) has a longitudinal acceleration sensor (111, 121) for detecting a vehicle acceleration in the direction of the vehicle longitudinal axis (A-A') and a transverse acceleration sensor (112, 122) for detecting a vehicle acceleration transverse to the vehicle longitudinal axis (A-A').

3. Control arrangement for a restraining means in a vehicle with a sensor arrangement in accordance with one of the previous claims, with an evaluation device (2) for evaluation of the signals (LS1, LS2, QS1, QS2) supplied from the devices (11, 12) and for generating, depending on the evaluation, a control signal (S) for the restraining means (4).

4. Control arrangement in accordance with Claim 3, whereby the evaluation device (2) is fitted in a central area of the vehicle (FZ).

5. Control arrangement in accordance with Claim 3, whereby the evaluation device (2) has two evaluation units (21, 22) with one evaluation unit (21, 22) being assigned to one device (11, 12) and with both evaluation units (21, 22) being connected via a line (3) to each other for the transmission of code signals.

6. Control arrangement in accordance with Claim 5,
- with two control units (31, 32), whereby each control unit (31, 32) has a device (11, 12) and an evaluation unit (21, 22), and
- whereby one control unit (31) is fitted in the left half (LH) of the vehicle and the other control unit (32) is fitted in the right half (RH) of the vehicle.

7. Occupant protection system with a control arrangement in accordance with one of Claims 3 to 6,
- with at least one restraining means (42) for side impact protection in each half of the vehicle (LH, RH) and with at least one restraining means (41) for front impact protection,
- whereby the restraining means (41,42) is electrically connected to the evaluation device (2).

8. Occupant protection system in accordance with Claims 5 and 7, whereby the restraining means for side impact protection (421) and for front impact protection (411) in the left half (LH) of the vehicle are electrically connected with the evaluation unit (21) arranged in the left half (LH) of the vehicle, and whereby the restraining means for side impact protection (422) and front impact protection (412) arranged in the right half (RH) of the vehicle are electrically connected to the evaluation unit (32) arranged in the right half (RH) of the vehicle.

## Revendications

1. Agencement de capteurs, pour véhicule automobile, permettant de constater une collision, comprenant un dispositif (11, 12) servant à détecter une accélération (LS1, LS2, QS1, QS2) dans chaque moitié de véhicule (LH, RH), rapportée à l'axe longitudinal de véhicule (A-A'), **caractérisé en ce que** chaque dispositif (11, 12) comporte deux capteurs d'accélération (111, 112, 121, 122) à axes de sensibilité d'orientations différentes.

2. Agencement de capteurs suivant la revendication 1, dans lequel chaque dispositif (11,12) comporte un capteur d'accélération longitudinale (111, 121) servant à détecter une accélération de véhicule suivant la direction de l'axe longitudinal de véhicule (A-A') et un capteur d'accélération transversale (112, 122) servant à détecter une accélération de véhicule transversale à l'axe longitudinal de véhicule (A-A').

3. Agencement de commande pour un moyen de retenue situé dans un véhicule automobile, comprenant un agencement de capteurs suivant l'une des revendications précédentes, et un circuit d'analyse (2) servant à analyser les signaux (LS1, LS2, QS1, QS2) délivrés par les dispositifs (11, 12) et à produire, en fonction de ceux-ci, un signal de commande (S) destiné au moyen de retenue (4).

4. Agencement de commande suivant la revendication 3, dans lequel le circuit d'analyse (2) est disposé dans la zone de milieu du véhicule (FZ).

5. Agencement de commande suivant la revendication 3, dans lequel le circuit d'analyse (2) comprend deux unités d'analyse (21, 22) et chaque unité d'analyse (21, 22) est associée à un dispositif (11, 12) respectif, et dans lequel les deux unités d'analyse (21, 22) sont reliées l'une à l'autre par une ligne (3) en vue de la transmission de signaux codés.

6. Agencement de commande suivant la revendication 5,
- comprenant deux appareils de commande (31, 32), chaque appareil de commande (31, 32) comportant un dispositif (11, 12) et une unité d'analyse (21, 22), et
- dans lequel le premier appareil de commande (31) est disposé dans la moitié de véhicule gauche (LH) et l'autre appareil de commande (32) est disposé dans la moitié de véhicule droite (RH).

7. Système de protection d'occupants comportant un agencement de commande suivant l'une des revendications 3 à 6,
- comportant au moins un moyen de retenue (42) servant à la protection vis-à-vis des collisions latérales dans chaque moitié de véhicule (LH, RH) et au moins un moyen de retenue (41) servant à la protection vis-à-vis des collisions frontales,
- dans lequel les moyens de retenue (41, 42) sont reliés électriquement à un agencement d'analyse (2).

8. Système de protection d'occupants suivant les revendications 5 et 7, dans lequel les moyens de retenue (421) servant à la protection vis-à-vis des collisions latérales et vis-à-vis des collisions frontales qui sont disposés dans la moitié de véhicule gauche (LH) sont reliés électriquement à l'unité d'analyse (21) disposée dans la moitié de véhicule gauche (LH) et dans lequel les moyens de retenue servant (422) à la protection vis-à-vis des collisions latérales et (412) à la protection vis-à-vis des collisions frontales qui sont disposés dans la moitié de véhicule droite (RH) sont reliés électriquement à l'unité d'analyse (32) disposée dans la moitié de véhicule droite (RH).
